# EUROPEAN PATENT APPLICATION

(11) **EP 4 438 575 A1**
(43) Date of publication of application: **02.10.2024**
(21) Application number: 23165449.2
(22) Date of filing: 30.03.2023
(51) Int. Cl.: C04B 7/21, C04B 28/08, C04B 28/14, C04B 24/06

(54) **NOVEL BINDER COMPOSITION BASED ON LADLE SLAG**

(71) Applicant: Kerakoll S.p.A., 41049 Sassuolo (MO) (IT)
(72) Inventor: BARBIERI, Cristina, 41049 SASSUOLO (MODENA) (IT); LIUZZI, Vincenzo, 41049 SASSUOLO (MODENA) (IT); SPAGGIARI, Alberto, 41049 SASSUOLO (MODENA) (IT)
(74) Representative: Biggi, Cristina

(57) **Abstract**

The present invention relates to a composition usable as a binder for premixed cement-based products, comprising ladle slag, calcium sulphate, at least one alkaline sulphate and at least one carboxylic acid, wherein the carboxylic acid is present in an amount of between 0.05% and 3% by weight relative to the total weight of the composition, preferably between 0.17% and 1.5%.

The invention also relates to a premixed cement-based product comprising said composition, aggregates and water or a premixed cement-based product to be hydrated comprising said composition and aggregates. The object of the present invention also relates to a cement-based conglomerate obtained from the premixed cement-based product of the invention, once hardened.

## Description

### TECHNICAL FIELD

The present invention relates to a binding composition for premixed cement-based products, comprising ladle slag, calcium sulphate, at least one alkaline sulphate and at least one carboxylic acid, wherein the carboxylic acid is present in an amount of between 0.05% and 3% by weight relative to the total weight of the composition, preferably between 0.17% and 1.5%.

### STATE OF THE ART

Metallurgical processes for cast iron and steel production generate substantial amounts of slag, whose composition is closely related to the characteristics of the raw materials and the additives used in the process. Part of this steel slag is initially accumulated in steelmaking plants and possibly sent to waste disposal sites, whereas part of it is used in civil engineering applications, thus alleviating the needs tied to its disposal and reducing the use of natural resources.

Depending on whether the slag derives from metallurgical processes in a blast furnace, oxygen converter, electric arc furnace, ladle furnace for refinement and so on, the slag will have different physicochemical characteristics and will take its name based on the furnaces it is generated in.

Metallurgical slag is classified on the basis of the legislation currently in force, such as, for example Regulation (EC) No 1907/2006 concerning the Registration, Evaluation, Authorisation and Restriction of Chemicals (REACH), according to such physicochemical characteristics.

For every type of metallurgical slag, the REACH Ferrous Slag Consortium (RFSC), scientifically guided by the German Research Institute for Iron and Steel Slags (FEhS), has thus defined the qualitative and quantitative parameters of the substance as is and of its eluate, so as to achieve a unique characterisation of slag, based on which the studies required under the REACH Regulation have been developed.

The granulated slag generated by blast furnaces is called "granulated blast furnace slag" (GBS, CAS number 65996-69-2, EINECS number 266-002-0) or "air-cooled blast furnace slag" (ABS, CAS number 65996-69-2, EINECS number 266-002-0); the slag generated by converters is called "basic oxygen furnace slag" (BOS,20CAS number 91722-09-7, EINECS number 294-409-3); the slag obtained from electric furnaces is called "electric arc furnace slag from carbon steel production" (EAF-C, undefined CAS number, EINECS number 932-275-6) or "electric arc furnace slag from stainless/high alloy steel production" (EAF-S, undefined CAS number, EINECS number 932-476-9); finally, the slag obtained from secondary metallurgy is called "steelmaking slag" (SMS, CAS number 65996-71-6, EINECS number 266-004-1).

Some types of slag are commonly used as raw materials for the construction industry and are therefore recognised as a by-product. For example, blast furnace slags (GBS and ABS) have always been used in the production of blast furnace slag cement according to standard UNI EN 197-1, whereas electric arc furnace slags from carbon steel production (EAF-C) are commonly used as a replacement for natural aggregates in civil engineering works and road construction. In both of the above-mentioned cases, the use of slags reduces the consumption of natural resources and avoids the landfill disposal thereof.

Other types of slag, in particular steelmaking slag (SMS), is more difficult to place on the market as a by-product and is very often considered as waste to be disposed of, thus constituting a serious problem from both an environmental and a logistical viewpoint. With reference to 2021, the production of steelmaking slag in Italy was quantified as over 500,000 tonnes and it is estimated that over 80% was sent as waste to landfills.

Steelmaking slag - *Registration Dossier* - *ECHA (europa.eu)* - or ladle slag derives from secondary processing of steel obtained with the EAF process (I. Z. Yildrim et al., "Chemical, Mineralogical, and Morphological Properties of Steel Slag", Advances in Civil Engineering (2011), ID463638, DOI: 10.1155/2011/463638). It is also referred to as "secondary slag" or "reduction slag", because it is obtained from a secondary metallurgical reduction process (S. Choi et al., "Hydration reactivity of calcium-aluminate-based ladle furnace slag powder according to various cooling conditions", Cement and Concrete Composites (2020) vol. 114, 103734, https://doi.org/10.1016/j.cemconcomp.2020.103734).

In jargon, moreover, the slag deriving from an electric arc furnace (EAF) is defined as "black slag", whilst the slag deriving from the steel refinement phase outside that furnace (secondary process), which takes place in a ladle furnace (ladle slag), is in turn defined as "white slag". In the secondary steelmaking process, the reduction of iron oxide into actual steel takes place and the slag that is generated is less contaminated than black slag. As already indicated above, the two types of slag have a different analytic and product composition.

One of the problems that makes it difficult to use ladle slag, which is characterised by a low iron oxide content and high calcium oxide and alumina content, is the fact that once cooled to room temperature it forms therewithin free crystalline oxides, such as, for example, calcium oxide, magnesium oxide and iron oxide. Said oxides can subsequently react with the water for mixing cement-based mixtures in which pulverised electric arc furnace slag is used, thus producing calcium, magnesium and iron hydroxides, which act as expansive substances, ruining the cement-based materials that contain them (J.-M. Kim et al., Construction and Building Materials (2016) vol. 127, p. 93-101). Furthermore, the transformation of the crystalline lattice that occurs during cooling leads to the formation of a fine powdery material, which considerably complicates the environmental and logistical management thereof.

Numerous systems and processes have been proposed to resolve the above-mentioned problems, with the aim of simplifying the management of ladle slag in a manner that is safe from an environmental viewpoint and sustainable from an economic viewpoint and transforming it into a product that can be reused in other fields of application.

As in the case of blast furnace slag, these processes include granulation with water or dry granulation of slag in the liquid state. In this manner, the ladle slag is cooled abruptly and transformed into granules with a vitreous or crystalline structure, thus acquiring hydraulic characteristics.

Dry granulation, as described for example in document WO2021156789A1 in the name of Tenova Spa, is preferable, where possible, to that with water, since it avoids the consumption of water and reduces water treatment needs.

Ladle slag, rich in calcium aluminate and aluminium oxide, is already reactive on its own: in the presence of water, it becomes hydrated, giving rise to a cementitious phase. However, these reaction products are metastable.

The addition of gypsum to decrease the reactivity of calcium aluminate is known: in fact, hydration between gypsum and calcium aluminate can lead to ettringite formation.

There is thus a felt need for hydraulic binding mixtures comprising steel slags, usable as additives for premixed cement-based products, and which allow the disadvantages of the prior art to be overcome.

### DEFINITIONS

Unless otherwise defined, all the terms of the art, notations and other scientific terms used herein are intended to have the meanings commonly understood by those who are skilled in the art to which this description pertains. In some cases, terms with commonly understood meanings are defined herein for the sake of clarity and/or for ease of reference; the inclusion of such definitions in the present description should thus not be interpreted as representing a substantial difference from what is generally understood in the art.

The terms "comprising", "having", "including" and "containing" are to be understood as open-ended terms (i.e. the meaning of "comprising, but not limited to") and are to be considered as a support also for terms like "consist essentially of", "consisting essentially of", "consist of" or "consisting of".

For all the intervals indicated in the text, figures and claims of the present patent application, it is understood that the endpoints of these intervals are included.

The terms "obtainable", "obtained", "obtainable directly from", "obtained directly from" are considered equivalent.

"Premixed cement-based product" means any product consisting of binders, inert substances and additives, adapted to harden once mixed with water. Such products can have a wide variety of applications in the building industry, from tiling to concrete restoration, to interior decoration.

"Ladle slag" means slag rich in amorphous calcium aluminate and with a low content of iron and calcium oxides, wherein amorphous calcium aluminate is preferably present in a percentage of at least 94% by weight, and the other oxides, for example iron, calcium, magnesium, and titanium oxides and others, are less than 6% overall. Said ladle slag originates from the secondary refinement process for steel produced by means of electric arc furnaces. In the secondary process, one observes a reduction of the iron oxide in steel.

The term "anhydrite" indicates anhydrous calcium sulphate.

The term "gypsum" indicates calcium sulphate dihydrate.

The term "scagliola" indicates calcium sulphate hemihydrate.

The term "ettringite" indicates the compound that forms due to the reaction between calcium aluminate and calcium sulphate in the presence of water.

The terms "setting" and "setting time" are synonymous and refer to the time necessary in order for the fresh product to reach a hardened state, after which time the behaviour changes from plastic to fragile.

The term "pot life" means the time in which the product preserves intact its rheological and workability characteristics in the fresh state.

"Hardening time" means the time in which mechanical strength grows once the product has hardened.

"Alkaline sulphate" means, for example, potassium sulphate, sodium sulphate, lithium sulphate, magnesium sulphate, aluminium sulphate and strontium sulphate. It preferably means potassium sulphate.

"Carboxylic acid" preferably means an acid that has at least two carboxyl groups (an at least dicarboxylic acid), preferably a dicarboxylic acid that has a hydroxyl group in the α position relative to the carboxyl group (alpha-hydroxy acid (AHA)). Preferably, the carboxylic acid is selected from tartaric acid, malic acid, citric acid, lactic acid, succinic acid, oxalic acid and/or malonic acid. The salts of said carboxylic acid, such as, for example the sodium salt or potassium salt, can also be used.

Development of "short-term mechanical strength" means the development of mechanical strength within 24 hours after the start of mixing of the binding composition with water.

### BRIEF DESCRIPTION OF THE FIGURES

Figure 1 contains table 1, in which one can see the experimental results supporting the regulatory capacity of potassium sulphate with respect to ettringite formation in conglomerates obtained with a composition according to the invention.
Figure 2 contains table 4, in which one can see the experimental results supporting the capacity of tartaric acid to accelerate the formation of primary ettringite.

### SUMMARY OF THE INVENTION

The present invention relates to a composition usable as a binder for premixed cement-based products, comprising ladle slag, calcium sulphate, at least one alkaline sulphate and at least one carboxylic acid, wherein the carboxylic acid is present in an amount of between 0.05% and 3% by weight relative to the total weight of the composition, preferably between 0.17% and 1.5%.

The invention also relates to a premixed cement-based product comprising said composition, aggregates and water or a premixed cement-based product to be hydrated comprising said composition and aggregates. The object of the present invention also relates to a cement-based conglomerate obtained from the premixed cement-based product of the invention, once hardened.

### DETAILED DESCRIPTION OF THE INVENTION

The present invention relates to a composition comprising ladle slag, calcium sulphate, at least one alkaline sulphate and at least one carboxylic acid, wherein the carboxylic acid is present in an amount of between 0.05% and 3% by weight relative to the total weight of the composition, preferably between 0.17% and 1.5%.

Said composition is used as a binder in premixed cement-based products, as it acts as a rapid expansive binder. The composition of the invention advantageously permits a rapid development of mechanical strength in the premixed cement-based products to which it is added, once mixed with water and hardened.

Preferably, the composition of the invention comprises ladle slag in a percentage by weight of between 37% and 84.65% relative to the total weight of the composition, even more preferably between 71 and 75%.

According to another preferred aspect, the composition of the invention comprises calcium sulphate in a percentage by weight of between 15% and 50% relative to the total weight of the composition, more preferably in a percentage of between 22 and 24%.

Furthermore, according to another preferred aspect, the composition of the invention comprises the at least one alkaline sulphate in a percentage by weight of between 0.3 and 10% relative to the total weight of the composition, more preferably between 2.7 and 3.5%.

According to another particularly preferred aspect, the composition of the invention comprises the at least one carboxylic acid in a percentage by weight of between 0.05% and 3% relative to the total weight of the composition, preferably between 0.17% and 1.5%.

According to a more preferred aspect, the composition of the invention has the following percentage composition by weight:

| | |
|---|---|
| - ladle slag: | 37-84.65%; |
| - calcium sulphate: | 15-50%; |
| - alkaline sulphate: | 0.3-10%; |
| - carboxylic acid: | 0.05-3%. |

According to a further preferred aspect, the composition of the invention has the following percentage composition by weight:

| | |
|---|---|
| - ladle slag: | 71-75%; |
| - calcium sulphate: | 22-24%; |
| - alkaline sulphate: | 2.7-3.5%; |
| - carboxylic acid: | 0.3-0.7% |

Preferably, the calcium sulphate used in the composition of the invention is selected from anhydrite, gypsum and scagliola. Even more preferably, the calcium sulphate used is in the form of anhydrite.

According to a preferred aspect, the at least one alkaline sulphate is selected from potassium sulphate, sodium sulphate, lithium sulphate, magnesium sulphate, aluminium sulphate and strontium sulphate and it is preferably potassium sulphate.

According to a further preferred aspect, the carboxylic acid used in the composition of the invention is an acid that has at least two carboxyl groups (an at least dicarboxylic acid), preferably wherein said at least dicarboxylic acid has a hydroxyl group in the α position relative to the carboxyl group (alpha-hydroxy acid (AHA)). According to a further preferred aspect, the acid of the present invention is selected from tartaric acid, malic acid, citric acid, lactic acid, succinic acid, oxalic acid and/or malonic acid. The most preferred acid is tartaric acid. The salts of the carboxylic acids indicated above, such as, for example the sodium or potassium salts of said acids, can also be used.

Ladle slag, consisting mainly of amorphous calcium aluminate, possesses a hydraulic activity that manifests itself in rapid, strongly exothermic reactions when it is placed in contact with water. The slag's reactivity can also depend on its degree of fineness (Blaine), as indicated in the experimental part. At higher Blaine values, i.e. with a larger surface area, the slag is more reactive.

According to a preferred aspect, the ladle slag used in the present invention has Blaine fineness values of between 2,000 and 11,000 cm²/g, even more preferably between 3,000 and 6,000 cm²/g.

In order to decrease the high exothermicity of ladle slag, calcium sulphate is then added, which is useful for regulating setting, pot life and hardening time.

From the reaction between the calcium sulphate and calcium aluminate of the ladle slag in the presence of water one obtains ettringite, a mineral of an expansive type which determines the anti-shrinkage/expansive function of the composition of the invention when used in premixed cement-based products with water. In fact, it is desirable to avoid having shrinkages of the material during the curing of conglomerates in order not to impair their performance.

Ettringite generally forms in two moments: at the start of mixing of a binding composition with water (primary ettringite) and in a second moment (secondary ettringite), when the binder has by now hardened. The formation of secondary ettringite introduces states of tension within the system, as secondary ettringite has its own volume and the system could also end up being broken, with a decrease in mechanical performance. Therefore, it is preferable to avoid the formation of secondary ettringite.

In the composition of the invention, the at least one alkaline sulphate, preferably potassium sulphate, sodium sulphate, lithium sulphate, magnesium sulphate, aluminium sulphate and strontium sulphate, preferably potassium sulphate, regulates the rate of formation of ettringite both in the short term and in the long term, because it prevents there from being a continuous reaction between the calcium sulphate, preferably anhydrite, and the ladle slag. In fact, as it has a higher solubility than calcium sulphate, alkaline sulphate immediately makes a concentration of sulphate ions available for the slag, which increases its initial reactivity, thus accelerating ettringite formation. In this manner, calcium sulphate, in the presence of water, reacts with the calcium aluminate present in the ladle slag with a given timing so as to quantitively form primary ettringite and avoid the formation of secondary ettringite.

In other words, the alkaline sulphate allows ettringite to form only when the elastic modulus of the binding system is still low: in this manner, also in the presence of an expansion due to ettringite, it will not introduce mechanical tensions such as to overcome the physical resistance of the system under tensile stress.

According to a preferred aspect, when the composition of the invention is mixed with water and a premixed cement-based product, the production of ettringite is observed mainly in the first 24 hours after the start of mixing. According to a more preferred aspect, the production of ettringite is observed only in the first 6 hours after the start of mixing.

In the binding composition of the invention, carboxylic acid performs the known function of slowing down setting times, something that is generally also accompanied by a delay in the development of short-term mechanical strength. However, unexpectedly, in the composition of the invention the increase in the times is not accompanied by a deterioration in the short-term mechanical strength, as normally occurs. On the contrary, when carboxylic acid is present in an amount of between 0.05% and 3% by weight of the total weight of the composition, preferably between 0.17% and 1.5%, one obtains an increase in the short-term mechanical strength of the cement-based conglomerate obtained, as demonstrated in the experimental part.

Furthermore, the presence of carboxylic acid in an amount of between 0.05% and 3% by weight relative to the total weight of a composition according to the invention, preferably between 0.17% and 1.5%, advantageously leads to an acceleration in the rate of formation of primary ettringite, as demonstrated in the experimental part.

The premixed cement-based product of the invention comprises a composition according to the invention together with (inert) aggregates, said aggregates being selected in the group consisting of: stones, artificial aggregates, sand, endogenous rocks, exogenous rocks, expanded clay, glass, or a combination thereof.

The invention further relates to a premixed cement-based product comprising the composition of the invention, (inert) aggregates selected from stones, artificial aggregates, sand, endogenous rocks, exogenous rocks, expanded clay, glass, or a combination thereof, and water.

According to a preferred aspect, the aggregates are present in the premixed cement-based product in an amount of between 5% and 50% w/w (relative to the weight of the dry mixture).

The premixed cement-based product comprising the composition according to any one of the above-described embodiments and aggregates, likewise as described above, must be hydrated at the time of use. According to a preferred aspect, water is added to the premixed cement-based product to be hydrated in an amount of between 12% and 50 % w/w (relative to the weight of the dry mixture).

The object of the present invention also relates to a cement-based conglomerate obtained from the premixed cement-based product of the invention, once hardened.

The invention is illustrated below by means of experimental examples, which are not to be considered as limiting the scope of the invention.

### EXAMPLES

### Example 1

### Regulatory capacity of potassium sulphate with respect to ettringite formation in conglomerates obtained with a composition according to the invention.

Two binding compositions according to the invention were prepared, the only difference being whether potassium sulphate was present or not, in order to demonstrate the capacity of this compound to control ettringite formation by favouring the formation of primary ettringite and inhibiting the formation of secondary ettringite.

For each of the two binding compositions, 5 test samples of 50 g each were produced; 300 g of material were weighed to produce them.

The composition without potassium sulphate was prepared with a slag:anhydrite ratio = 3:1. In particular, 75% slag and 25% anhydrite were used.

The composition containing potassium sulphate was prepared with 72.75% slag, 24.25% anhydrite and 3% K₂SO4.

Once weighed, the two compositions were mixed in order to homogenise the powders within them.

To produce the test samples, water was added and an electric mixer was used, care being taken to mix the powder and water for at least 2 minutes. The mixture was then poured into small plastic containers. Finally, the test samples were allowed to cure in a climate chamber with 60% humidity and a temperature of 21°C.

The test samples of the first composition were obtained by mixing the composition with water, in a water/composition ratio of 0.6.

The test samples of the second composition were obtained by mixing the composition with water, in a water/cement ratio of 0.5.

Water at 4° C was used to obtain the test samples.

XRD mineralogical analysis, with corundum as the standard, was performed 6 hours, 24 hours, 48 hours, 7 days and 28 days after mixing with water in order to quantify the crystalline phases and amorphous component within the test samples. The % of the amorphous component refers to everything within the test sample that does not possess an organised structure like that of a crystal; it does not necessarily refer to the initial amorphous calcium aluminate.

The periclase, dolomite and quartz phases are present in the ladle slag reagent. The calcite, syngenite, monosulphate and portlandite phases develop after hydration of the compositions.

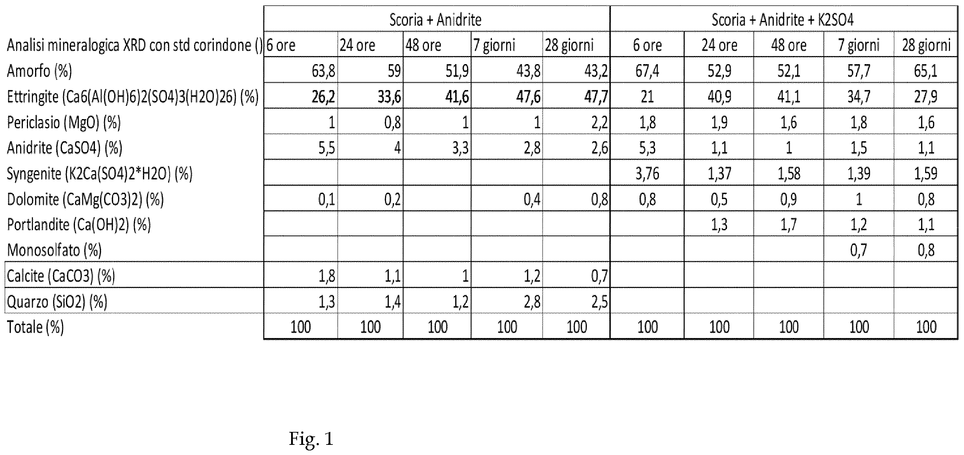

With reference to table 1 in figure 1, in the row regarding ettringite, it can be observed that in the conglomerate obtained from the composition without potassium sulphate, ettringite formation continues over time, though the largest part of growth is observed in the first hours. In the conglomerate obtained from the composition to which potassium sulphate was added, by contrast, it can be observed that ettringite formation increases in the first 24 hours and then decreases.

As further support of this analysis, it may be considered that the percentage of anhydrite, i.e. of calcium sulphate used as a reagent for ettringite formation, varies in table 1 in figure 1: in the system without potassium sulphate, the anhydrite remains in greater percentages even after long periods compared to the system to which potassium sulphate was added. In fact, after 28 days the percentage value of anhydrite is 2.6% in the system without potassium sulphate, versus a percentage value of anhydrite of 1.1% in the system with potassium sulphate. Therefore, the reactivity of the first system without potassium sulphate is lower and poorly regulated compared to the reactivity of the second system, which sees less of it at 28 days.

### Example 2

### Demonstration of the capacity of tartaric acid to increase the short-term mechanical strength of conglomerates obtained with a composition according to the invention.

Two binding compositions according to the invention were prepared with 70% of an inert phase (standard sand) and 30% of a binding phase. The binding phase is composed of 22% ladle slag, 6.7% anhydrite and 1% K₂SO4 and different percentages of tartaric acid, specifically 0.05, 0.1 and 0.15%.

For the production of the test samples, water was added and an automatic mixer was used. Then the mixture was poured into 4x4x4 cm moulds having a cubic shape and compacted. Finally, the test samples were cured according to standard UNI EN 12190, PCC conditioning, for 24h, 7 days and 28 days.

The two compositions differ only in terms of the surface area of the ladle slag (different Blaine values).

Increasing percentages of tartaric acid were used in the compositions to demonstrate that with increases in said percentage the setting time increases, but the mechanical compressive strength at 24 hours also increases, something that does not occur in conventional systems. Normally, an increase in the setting time corresponds to a decrease in mechanical performance.

**Table 2 - surface area of ladle slag equal to about 4,500 cm²/g (Blaine) and presence of 1% by weight of potassium sulphate.**

| | | | |
|---|---|---|---|
| % by weight of tartaric acid | 0.05 | 0.1 | 0.15 |
| Setting time (minutes) | 10 | 20 | 40 |
| Mechanical compressive strength 24 hours (MPa) | 31 | 32 | 42 |

**Table 3 - surface area of ladle slag equal to about 3,000 cm²/g (Blaine) and presence of 1% by weight of potassium sulphate.**

| | | | |
|---|---|---|---|
| % by weight of tartaric acid | 0.05 | 0.1 | 0.15 |
| Setting time (minutes) | 4 | 38 | 70 |
| Mechanical compressive strength 24 hours (MPa) | 0 | 9 | 14 |
| Mechanical compressive strength 7 days (MPa) | 0 | 17.7 | 23.8 |

### Example 3

### Demonstration of the capacity of tartaric acid to accelerate the formation of primary ettringite.

Two binding compositions according to the invention were prepared, with the only difference being the presence or absence of tartaric acid to demonstrate the capacity of this compound to accelerate the formation of primary ettringite.

For the production of five 50 g test samples, 300 g of material were weighed for each of the two compositions. The formulas composed of the binder alone were prepared with a slag:anhydrite ratio = 3:1. In particular, 72.75% slag, 24.25% anhydrite and 3% K₂SO4 were used.

The composition also containing tartaric acid was prepared with 72.4% slag, 24.1 % anhydrite, 3% K₂SO4 and 0.5% tartaric acid.

Once weighed, the two compositions were mixed in order to homogenise the powders within them.

For the production of the test samples, water was added and an electric mixer was used, with care being taken to mix the powder and water for at least 2 minutes.

Then the mixture was poured into small plastic containers. Finally, the test samples were left to cure in a climate chamber with 60% humidity and a temperature of 21°C.

The test samples of the first composition (binder alone) were obtained by mixing the composition with water, in a water/composition ratio of 0.5. Water at 4° C was used to obtain the test samples.

The test samples of the second composition (with tartaric acid) were obtained by mixing the composition with water, in a water/composition ratio of 0.43.

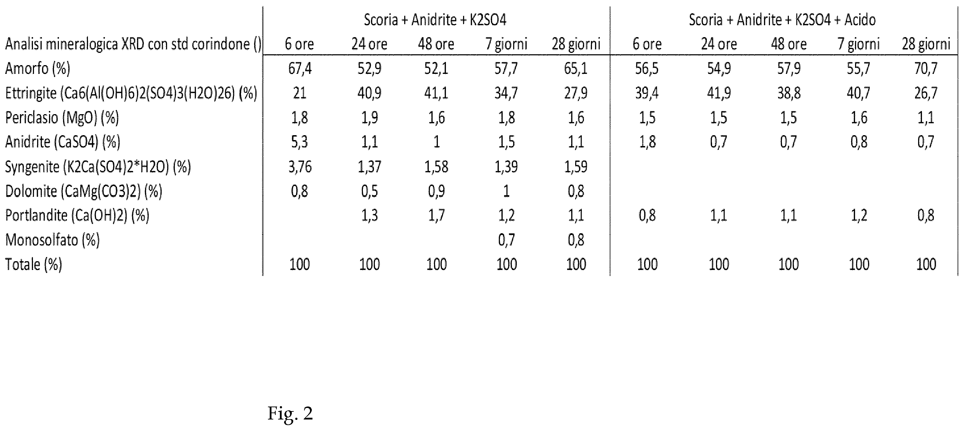

Water at room temperature was used to obtain the test samples. In the first composition ladle slag (referred to simply as slag in table 4 in Figure 2), anhydrite and potassium sulphate were mixed, and then water was added.

In the second composition ladle slag (referred to simply as slag in table 4 in Figure 2), anhydrite, potassium sulphate and tartaric acid in a percentage amount of 0.5% by weight of the total weight of the composition (referred to simply as "acid" in table 4 in figure 2) were mixed, and then water was added.

The presence of tartaric acid in the binding composition of the invention brings about a more rapid formation of primary ettringite: as can be seen in table 4 in figure 2, in fact, after 6 hours one observes a higher percentage consumption of the reagents, ladle slag and anhydrite, to form the product ettringite in the presence of tartaric acid, compared to the consumption of these reagents observed in the absence of tartaric acid. Consequently, the percentage amount of primary ettringite formed through the reaction between the calcium aluminate of the ladle slag and anhydrite is greater when tartaric acid is present in the binding composition.

## Claims

1. Composition comprising ladle slag, calcium sulphate, at least one alkaline sulphate and at least one carboxylic acid, wherein the carboxylic acid is present in an amount of between 0.05% and 3% by weight relative to the total weight of the composition, preferably between 0.17% and 1.5%.

2. Composition according to claim 1, wherein the ladle slag has Blaine fineness values of between 2,000 and 11,000 cm²/g, even more preferably between 3,000 and 6,000 cm²/g.

3. Composition according to any one of claims 1-2, wherein the percentage by weight of ladle slag is between 37% and 84.65% relative to the total weight of the composition, preferably between 71 and 75%.

4. Composition according to any one of the preceding claims, wherein the percentage by weight of calcium sulphate is between 15% and 50% relative to the total weight of the composition, preferably between 22 and 24%.

5. Composition according to any one of the preceding claims, wherein the percentage by weight of the at least one alkaline sulphate is between 0.3 and 10% relative to the total weight of the composition, preferably between 2.7 and 3.5%.

6. Composition according to any one of the preceding claims, wherein the calcium sulphate is selected from anhydrous calcium sulphate, calcium sulphate dihydrate and calcium sulphate hemihydrate; it is preferably anhydrous calcium sulphate.

7. Composition according to any one of the preceding claims, wherein the at least one alkaline sulphate is selected from potassium sulphate, sodium sulphate, lithium sulphate, magnesium sulphate, aluminium sulphate and strontium sulphate and is preferably potassium sulphate.

8. Composition according to any one of the preceding claims, wherein the carboxylic acid is an acid that has at least two carboxyl groups, preferably wherein said at least dicarboxylic acid has a hydroxyl group in the α position relative to the carboxyl group and even more preferably the carboxylic acid is selected from tartaric acid, malic acid, citric acid, lactic acid, succinic acid, oxalic acid and/or malonic acid.

9. Use of the composition according to any one of claims 1 to 8, as a binder for premixed cement-based products.

10. Premixed cement-based product comprising the composition according to any one of claims 1 to 8 and aggregates, said aggregates being selected in the group consisting of: stones, artificial aggregates, sand, endogenous rocks, exogenous rocks, expanded clay, glass, or a combination thereof, said premixed cement-based product being a premixed cement-based product in dry form to be hydrated.

11. Premixed cement-based product obtained by mixing the composition according to any one of claims 1 to 8 with water and aggregates, said aggregates being selected in the group consisting of: stones, artificial aggregates, sand, endogenous rocks, exogenous rocks, expanded clay, glass, or a combination thereof.

12. Cement-based conglomerate made with the premixed cement-based product according to either of claims 10 to 11.
